Europäisches Patentamt

European Patent Office

Office européen des brevets

(11) Veröffentlichungsnummer: **0 375 849**
**A1**

## (12) EUROPÄISCHE PATENTANMELDUNG

(21) Anmeldenummer: **89118166.1**

(22) Anmeldetag: **30.09.89**

(51) Int. Cl.⁵: **B65G 57/112**

(30) Priorität: **24.12.88 DE 3843794**

(43) Veröffentlichungstag der Anmeldung:
**04.07.90 Patentblatt 90/27**

(84) Benannte Vertragsstaaten:
**CH DE FR IT LI NL**

(71) Anmelder: **Kolbus GmbH & Co. KG**
**Osnabrücker Strasse 77**
**D-4993 Rahden(DE)**

Anmelder: **LEIFELD & LEMKE**
**MASCHINENFABRIK GmbH & Co. KG**
**Industriestrasse 77**
**D-4901 Hiddenhausen 4(DE)**

(72) Erfinder: **Budde, Rolf**
**Niederacker 1**
**D-4972 Löhne 4(DE)**

(54) Stapelvorrichtung zum lagenweisen Stapeln von Produkten.

(57) Bei einer Stapelvorrichtung zum lagenweisen Stapeln von Produkten, insbesondere von Büchern, Broschuren, od. dgl., mit einer Schiebeplattform, von der die zu einer Lage zusammengesetzten Produkte beim Zurückziehen der Schiebeplattform unter Anlage an einem feststehenden Abschubelement auf eine vorhandene Produktlage abgestreift werden weist die Schiebeplattform (5) zum Überbrücken des Höhenunterschiedes zwischen Schiebeplattform (5) und Produktlage (1a) ein schwenkbares, sich auf der Produktlage (1) abstützendes Vorderteil (5a) von bezogen auf die Schiebeplattform (5) geringer Stärke auf und das Abschubelement (7) ist beim Abstreifen der Produkte (1) dem Verlauf der Neigung des Vorderteiles (5a) folgend absenkbar.

Fig. 1

EP 0 375 849 A1

## Stapelvorrichtung zum lagenweisen Stapeln von Produkten

Die Erfindung bezieht sich auf eine Stapelvorrichtung zum lagenweisen Stapeln von Produkten, insbesondere von Büchern, Broschuren od. dgl., mit einer Schiebeplattform, von der die zu einer Lage zusammengesetzten Produkte beim Zurückziehen der Schiebeplattform unter Anlage an einem feststehenden Abschubelement auf eine vorhandene Produktlage abgestreift werden.

Nach dem Abschubsystem arbeitende Vorrichtungen zum lagenweisen Beladen von Paletten mit Produkten gehören allgemein zum Stand der Technik. Aus der DE-OS 31 07 495 ist beispielsweise eine Vorrichtung zum orientierten Ablegen von Stapeln aus bedruckten Zeitungs- oder Buchseiten oder sonstigen Drucksachen auf eine Palette bekannt, mit einer Schiebeplattform, auf die die zusammengestellte Formation von Produkten von einem Querschieber überführt wird. Die Schiebeplattform fährt danach bis über die Palette und nach Absenken eines Abschubelementes hinter die Formation und Absenken der Schiebeplattform auf eine bereits vorhandene Produktlage bewegt sich die Schiebe plattform unter dem feststehenden Abschubelement zum Abstreifen der Formation zurück.

Bei den mit Schiebeplattform und Abschubelement arbeitenden Stapelvorrichtungen ergibt sich durch die Bauhöhe der Plattform ein relativ großer Höhenunterschied zwischen der Auflagefläche der Plattform und der vorhandenen Produktlage auf der Palette. Der hierdurch bedingte relativ große Absetzweg beim Abstreifen der Produkte führt zwangsläufig dazu, daß die auf der Schiebeplattform exakt ausgerichteten Produkte ihre nach einer bestimmten Stapelordnung vorgegebene Formation nach dem Abstreifen verlieren, was in verstärktem Maße bei dünnen Produkten auftritt.

Vor allem bei dünnen Produkten besteht die Gefahr, daß sich diese übereinanderschieben mit der Folge einer instabilen Stapelung.

Ein Ausrichten nach erfolgter Abstapelung ist vielfach nicht durchführbar, beim späteren Entstapeln ergeben sich somit erhebliche Probleme.

Aufgabe der Erfindung ist es, eine Vorrichtung der gattungsgemäßen Art zum lagenweisen Stapeln von Produkten, insbesondere von dünnen Büchern, Broschuren od. dgl. zu schaffen, die bei einfachem Aufbau und funktionssicherer Arbeitsweise gewährleistet, daß die vorgegebene Formation der zu einer Lage zusammengestellten Produkte bei der Abgabe an die Stapelstelle exakt beibehalten wird.

Bei einer Stapelvorrichtung zum lagenweisen Stapeln von Produkten, insbesondere von Büchern, Broschuren od. dgl., mit einer Schiebeplattform, von der die zu einer Lage zusammengesetzten Produkte beim Zurückziehen der Schiebeplattform unter Anlage an einem feststehenden Abschubelement auf eine vorhandene Produktlage abgestreift werden, wird die Aufgabe dadurch gelöst, daß zum Überbrücken des Höhen unterschiedes zwischen Schiebeplattform und Produktlage die Schiebeplattform ein schwenkbares, sich auf der Produktlage abstützendes Vorderteil von bezogen auf die Schiebeplattform geringer Stärke aufweist und das Abschubelement beim Abstreifen der Produkte dem Verlauf der Neigung des Vorderteils folgend absenkbar ist.

Weitere vorteilhafte Ausgestaltungen ergeben sich aus den Unteransprüchen.

Ein Ausführungsbeispiel der erfindungsgemäßen Stapelvorrichtung wird nachfolgend anhand der Zeichnungen näher beschrieben. Dabei zeigen:

Fig. 1 die Stapelvorrichtung in Seitenansicht,

Fig. 2-4 die Stapelvorrichtung im Prinzip, in verschiedenen Ablaufphasen,

Fig. 5 die Anordnung der Steuermittel für das Abschubelement in perspektivischer Darstellung.

Die Vorrichtung zum Stapeln von dünnen Büchern 1 weist in bekannter Weise ein portalartiges Grundgestell 2 mit einem in diesem höhenverfahrbaren Tragrahmen 3 auf.

Der Tragrahmen 3 dient der Aufnahme eines taktweise umlaufend angetriebenen Zufuhrbandes 4, auf dem die Bücher 1 reihenweise zugeführt werden. Zwischen dem Obertrum und Untertrum des Zufuhrbandes 4 befindet sich in dem Tragrahmen 3 ferner eine Schiebeplattform 5, die zwischen einer Position in Bereich des Zufuhrbandes 4 und einer seitlich davon liegenden Position über einer Palette 6 in Horizontalrichtung über nicht dargestellte Antriebsmittel verfahrbar ist.

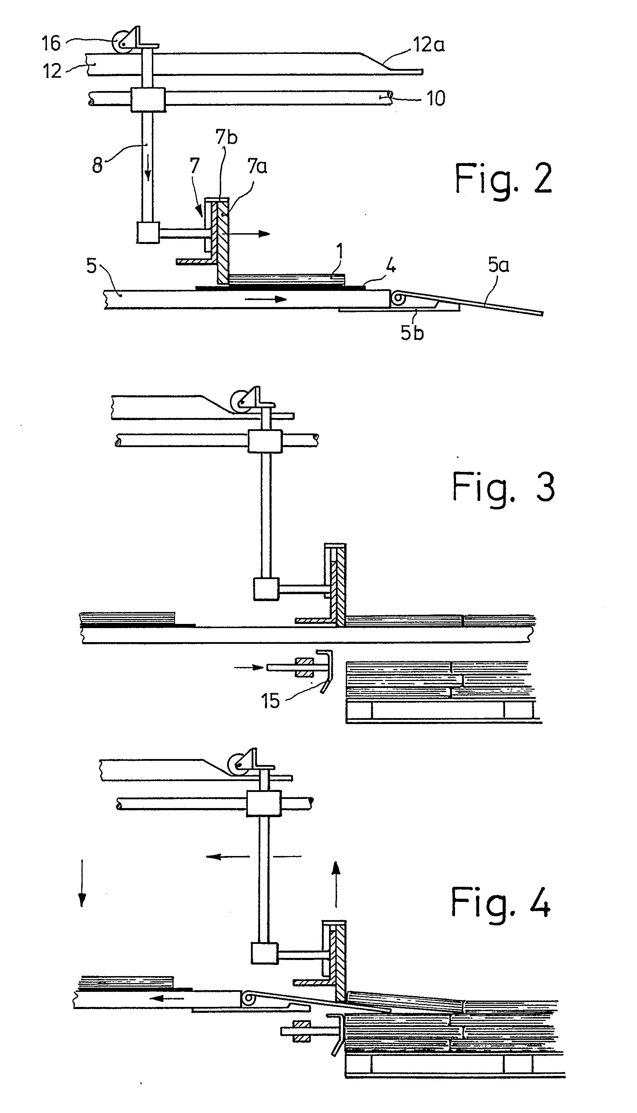

Von dem Tragrahmen 3 aufgenommen wird des weiteren ein Abschubelement 7, das oberhalb des Zufuhrbandes 4 und der Schiebeplattform 5 bis zur Stapelstelle hin- und zurück sowie auf- und nieder verfahrbar ist, wie dies gemäß Pfeilrichtung in den Figuren 2 bis 4 angedeutet wird.

Erfindungsgemäß befindet sich zum Überbrücken des Höhenunterschiedes zwischen der Schiebeplattform 5 und einer Bücherlage 1a auf der Palette 6 ein an der Stirnseite der Schiebeplattform 5 angelenktes schwenkbares Vorderteil 5a von bezogen auf eine Schiebeplattform 5 geringer Stärke, das von einem Stützelement 5b an der Schiebeplattform 5 in einer geneigten unteren Endstellung gehalten ist.

Beim Absenken der Schiebeplattform 5 bis zu einem definierten Abstand zur Bücherlage 1a wird die schwenkbare Frontplatte 5a von dem Stützelement 5b abgehoben und von der Buchlage 1a im Sinne einer Abstützung übernommen.

Nach der Erfindung ist des weiteren vorgesehen, daß das Abschubelement 7 mit einer in der Höhe frei beweglichen Abschiebeleiste 7a versehen ist, die beim Abstreifen der Bücher 1 durch Eigengewicht dem Verlauf der Neigung des Vorderteils 5a der Schiebeplattform 5 folgend, unter Anlage an dem Vorderteil 5a absenkbar ist.

Wie aus den Figuren 2 bis 4 ersichtlich, ist die Abschiebeleiste 7a derart ausgestaltet, daß sie frei höhenverschiebbar auf dem Abschubelement 7 geführt und mittels einer Kopfplatte 7b in einer unteren Endlage gehalten ist.

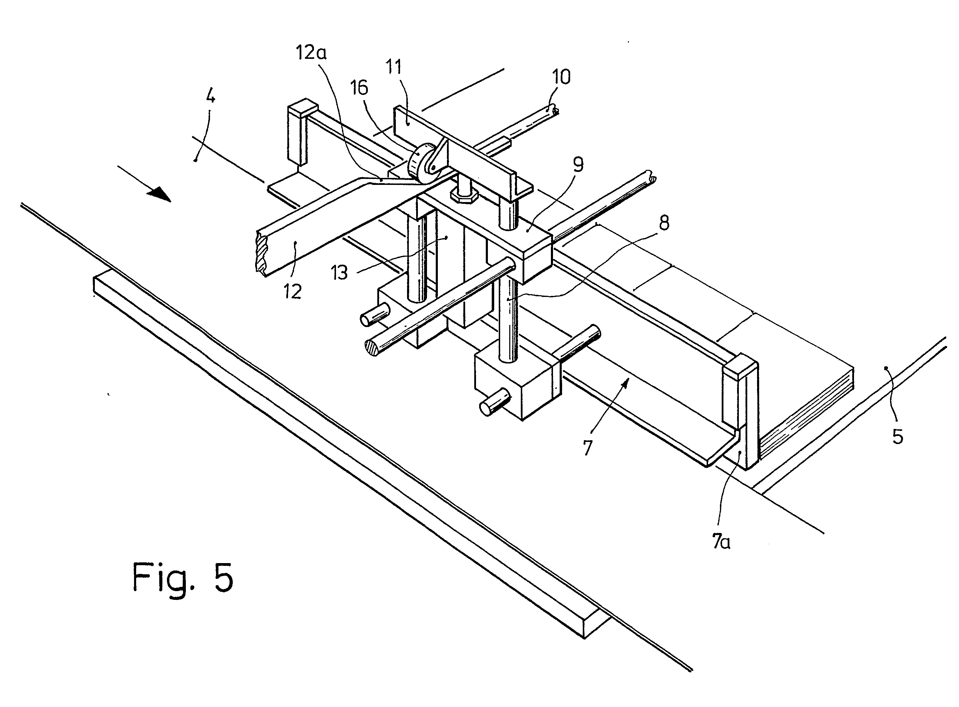

Wie aus der perspektivischen Darstellung in Figur 5 ersichtlich, befindet sich das Abschubelement 7 an vertikalen Tragstangen 8, die in einem auf horizontalen Führungsstangen 10 verfahrbaren Schlitten 9 in Vertikalrichtung frei verschiebbar geführt und endseitig von einer Brücke 11 mit einer Folgerolle 16 aufgenommen sind.

Parallel zu den horizontalen Führungsstangen 10 verläuft eine Steuerschiene 12, auf der sich die Folgerolle 16 abstützt. Die Steuerschiene 12 weist einen zwischen einem oberen und unteren Niveau liegenden schräg nach unten verlaufenden Streckenabschnitt 12a auf, wodurch die vom Abschubelement 7 getragene Abschiebeleiste 7a aus einer Position über dem Zufuhrband 4 in eine sich auf der Schiebeplattform 5 und nachfolgend auf dem geneigten Vorderteil 5a abstützende Position überführt wird.

Der Schlitten 9 nimmt einen Arbeitszylinder 13 auf, dessen Kolbenstange an der Brücke 11 angreift. Dabei wird der Arbeitszylinder 13 derart angesteuert, daß nach erfolgtem Abstreifen einer Bücherlage 1a von der Schiebeplattform 5 und dem Vorderteil 5a das Abschubelement 7 mit der Abschubleiste 7a in eine angehobene Position zum Zurückbewegen in die Ausgangslage verfahrbar ist.

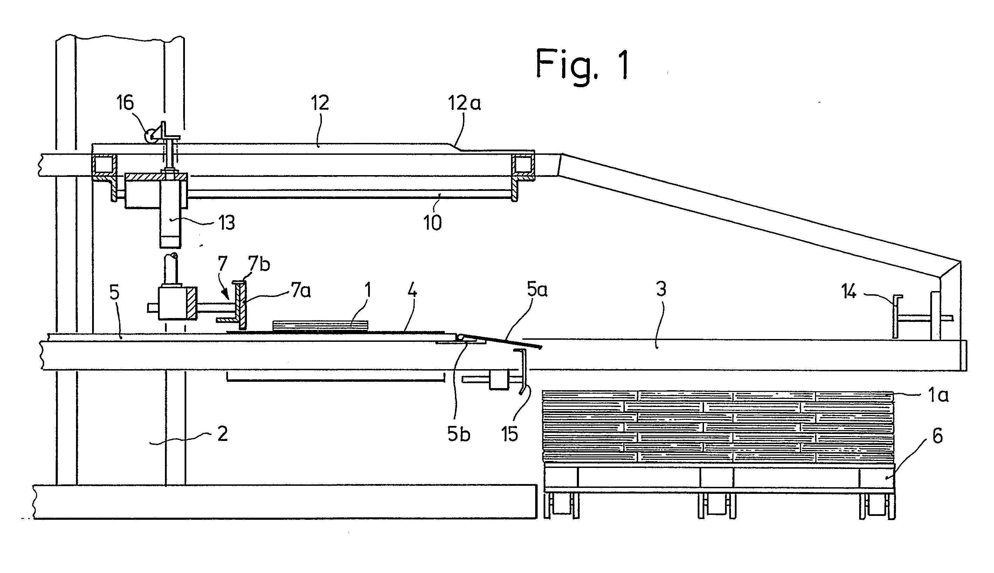

An dem Tragrahmen 3 befindet sich des weiteren, wie aus den Figuren 1, 3 und 4 ersichtlich, eine in der Horizontalebene über einen nicht dargestellten Arbeitszylinder vor- und zurückbewegbare Gegenhalteleiste 15, die beim Zurückziehen der Schiebeplattform 5 gegen die unteren Bücherlagen 1a gefahren wird.

Das Arbeitsprinzip der Stapelvorrichtung ergibt sich aus den Figuren 2 bis 4 wie folgt:

Die auf den oberen Trum des Zufuhrbandes 4 einlaufenden Bücherreihen werden auf der Schiebeplattform 5 zu einer Bücherformation zusammengestellt. Dabei befindet sich die Schiebeplattform 5 in der Seitenposition über der Palette 6 sowie unterhalb des Zufuhrbandes 4 und das Abschubelement 7 mit der Abschiebeleiste 7a schiebt die einzelnen zu geführten Bücherreihen vom Zufuhrband 4 herunter und auf die Schiebeplattform 5 mit dem Vorderteil 5a. Das Abschubelement 7 kehrt jeweils nach Abschieben einer Bücherreihe gemäß Pfeilrichtung in Figur 4 in die Ausgangsposition zurück, um sich hinter eine weitere zuzuführende Bücherreihe zu legen. Die Bücherreihen werden somit reihenweise, aneinanderliegend bis zu einem in Figur 1 dargestellten Anschlag 14 vorgeschoben.

Nach Fertigstellung einer Lagenformation wird die Schiebeplattform 5 mit dem Vorderteil 5a bis auf einen definierten Abstand zu einer zuvor abgesetzten Bücherlage 1a abgesenkt, worauf das in Position gehaltene Abschubelement 7 mit der Abschiebeleiste 7a die Bücherlage 1a beim Zurückziehen der Schiebeplattform 5, 5a von dieser abstreift.

Um ein Mitreißen einzelner Bücher der unteren Bücherlage 1a zu verhindern, legt sich die Gegenhalteleiste 15 gegen die unteren Bücherlagen 1a.

Die im Bereich des Zufuhrbandes 4 zunächst in einem definierten Abstand über dem Zufuhrband 4 gehaltene Abschiebeleiste 7a wird mittels der auf der Steuerschiene 12, 12a laufenden Folgerolle 16 abgesenkt, wobei sich die Abschiebeleiste 7a durch Eigengewicht bis auf die Schiebeplattform 5 und danach dem Verlauf der Neigung des Vorderteiles 5a folgend unter Anlage an diesen absenkt.

Die Verwendung des den Höhenunterschied zwischen Schiebeplattform 5 und Bücherlage 1a überbrückenden schwenkbaren Vorderteiles 5a von geringer Stärke ermöglicht ein funktionssicheres Abstapeln auch sehr dünner Bücher unter Beibehaltung ihrer exakt ausgerichteten Formation auf der Schiebeplattform 5.

## Ansprüche

1. Stapelvorrichtung zum lagenweisen Stapeln von Produkten, insbesondere von Büchern, Broschuren od. dgl., mit einer Schiebeplattform, von der die zu einer Lage zusammengesetzten Produkte beim Zurückziehen der Schiebeplattform unter Anlage an einem feststehenden Abschubelement auf eine vorhandene Produktlage abgestreift werden, dadurch gekennzeichnet, daß zum überbrücken des Höhenunterschiedes zwischen Schiebeplattform (5) und Produktlage (1a) die Schiebeplattform (5) ein schwenkbares, sich auf der Produktlage (1a) abstützendes Vorderteil (5a) von bezogen auf die Schiebeplattform (5) geringer Stärke aufweist und das Abschubelement (7) dem Verlauf der Neigung des Vorderteils (5a) folgend absenkbar ist.

2. Stapelvorrichtung nach Anspruch 1, dadurch gekennzeichnet, daß das Abschubelement (7) mit einer in der Höhe frei beweglichen Abschiebeleiste (7a) versehen ist, die beim Abstreifen der Produkte (1) durch Eigengewicht dem Verlauf der Neigung des Vorderteils (5a) folgend, unter Anlage an diesen absenkbar ist.

3. Stapelvorrichtung nach Anspruch 1 und 2, dadurch gekennzeichnet, daß das Vorderteil (5a) an der Stirnseite der Schiebeplattform (5) angelenkt ist und von einem Stützelement (5b) an der Schiebeplattform (5) in einer geneigten unteren Endstellung gehalten ist.

4. Stapelvorrichtung nach Anspruch 2, mit einem über der Schiebeplattform angeordneten Zufuhrband, dadurch gekennzeichnet, daß die Abschiebeleiste (7a) von dem Abschubelement (7) in einem definierten Abstand über dem Zufuhrband (4) gehalten ist und das Abschubelement (7) über Steuermittel (12, 12a, 16) absenkbar ist, derart, daß sich die Abschiebeleiste (7a) frei höhenbeweglich auf der Schiebeplattform (5) und dem geneigten Vorderteil (5a) abstützt.

Fig. 1

Fig. 2

Fig. 3

Fig. 4

Fig. 5

EP 0 375 849 A1

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| A | <u>DE - A1 - 3 210 189</u> (PICHLER) * Gesamt, insbesondere Seite 7; Fig. 1 * ---- | 1 | B 65 G 57/112 |

RECHERCHIERTE SACHGEBIETE (Int Cl⁵)

B 65 G

Der vorliegende Recherchenbericht wurde für alle Patentansprüche erstellt.

| Recherchenort | Abschlußdatum der Recherche | Prüfer |
|---|---|---|
| WIEN | 14-03-1990 | PISSENBERGER |